(19) Europäisches Patentamt
European Patent Office
Office européen des brevets

(11) Veröffentlichungsnummer: **0 435 060 A2**

# (12) EUROPÄISCHE PATENTANMELDUNG

(21) Anmeldenummer: **90123785.9**

(22) Anmeldetag: **11.12.90**

(51) Int. Cl.5: **C08G 18/08**, C08G 18/18, C08G 18/58

(30) Priorität: **23.12.89 DE 3942890**

(43) Veröffentlichungstag der Anmeldung: **03.07.91 Patentblatt 91/27**

(84) Benannte Vertragsstaaten: **BE CH DE ES FR GB IT LI NL**

(71) Anmelder: **BAYER AG**
**W-5090 Leverkusen 1 Bayerwerk(DE)**

(72) Erfinder: **Müller, Hanns-Peter, Dr.**
**Weizenfeld 36**
**W-5060 Bergisch Gladbach 2(DE)**
Erfinder: **Franke, Joachim, Dr.**
**An der Ruthen 2**
**W-5000 Köln-Stammheim(DE)**
Erfinder: **Müller, Henry, Dr.**
**Morgengraben 14**
**W-5000 Köln 80(DE)**

## (54) Verfahren zur Herstellung von Kunststoff-Formteilen.

(57) Verbesserte Kunststoff-Formteile werden erhalten, indem man Epoxy-Isocyanat-Reaktionsharzgemische unter Druck und erhöhten Temperaturen in eine Form überführt und in der Form unter dem durch die flüssige Gießharzmasse übertragenen Druck bis zur Verfestigung beläßt.

EP 0 435 060 A2

## VERFAHREN ZUR HERSTELLUNG VON KUNSTSTOFF-FORMTEILEN

Die Erfindung betrifft ein Verfahren zur Herstellung von Formkörpern durch Spritzgießen, wobei eine Kombination aus Polyepoxiden und Polyisocyanaten in stabilisierter und durch latente Katalysatoren voraktivierter Form als Gießharzmasse eingesetzt wird und in der Form unter Druck verfestigt wird.

Aus der DE-A-2 017 506 ist ein Verfahren zur Herstellung von Kunststoff-Formteilen durch Härtung von reaktionsfähigen flüssigen Gießharzmassen bekannt, das dadurch gekennzeichnet ist, daß die Gießharzmasse mittels Druck durch eine Rohrleitung in eine Form überführt wird, die eine höhere Temperatur als die Gießharzmasse aufweist und in der Form unter dem durch die flüssige Gießharzmasse in der Rohrleitung übertragenen Druck bis zur Verfestigung verbleibt. Dabei werden unter flüssigen Gießharzmassen verstanden:

1. Gemische aus Epoxidharzen und Härtern,
2. Gemische aus Di- oder Polyisocyanaten und Verbindungen mit mehr als einer Hydroxylgruppe pro Molekül,
3. Gemische aus ungesättigten Polyesterharzen und polymerisierbaren Monomeren.

Die beschriebenen Gießharzmassen weisen Nachteile auf, die die Verwendbarkeit des Verfahrens stark einschränken. So sind die am weit verbreitesten Epoxidharze auf Basis 4,4'-Dihydroxydiphenyl-dimethylmethan und Epichlorhydrin bei Raumtemperatur fest oder hochviskos, so daß die Fließfähigkeit der daraus hergestellten Gießharzmassen stark eingeschränkt ist. Ein weiterer Nachteil ist die geringe Füllstoffaufnahme. Will man die Viskosität erniedrigen, so kann man die Temperatur der Gießharzmasse erhöhen. Dadurch werden Apparatur und Verfahren komplizierter und die Gebrauchsdauer der Gießharzmasse kürzer. Erniedrigt man die Viskosität durch Zugabe von reaktiven Verdünnern, wie Butylglycidylether, oder nicht reaktiven Verdünnern, wie Dibutylphthalat, so werden die Festigkeiten der Kunststoff-Formteile herabgesetzt und die Wärmeformbeständigkeit erniedrigt. Gemische aus Di- oder Polyisocyanaten und Verbindungen mit mehr als einer Hydroxylgruppe pro Molekül weisen im allgemeinen eine Verarbeitungszeit von weniger als 1 Stunde auf, so daß man für ihre Verwendung aufwendige Misch-Dosiereinrichtungen mit Durchlaufmischern benötigt. Dadurch muß der Nachteil in Kauf genommen werden,daß das für hochwertige Formteile erforderliche Quarzmehl oder andere hochwertige Füllstoffe in Form von Flächengebilden nicht verwendet werden können.

Gemische aus ungesättigten Polyesterharzen und polymerisierbaren Monomeren ergeben Formteile mit ungenügenden Festigkeiten. Erst durch Verstärkermaterialien, z.B. Glasfasern, erhalten Formteile aus ungesättigten Polyestern ausreichende mechanische Eigenschaften. Die Mitverwendung der Verstärkermaterialien setzt die Fließfähigkeit der Gemische aus ungesättigten Polyesterharzen und polymerisierbaren Monomeren so weit herab, daß entweder der Transport durch die Rohrleitung nicht erfolgen kann, oder die Masse sich während des Transportes durch die Rohrleitung entmischt.

Zur Anwendung im technischen Spritz-Gießprozeß sind nur bestimmte Gießharze geeignet. So beschreibt die DE-A-2 438 205 bestimmte Kombinationen aus Epoxidharzen und ungesättigten Polyesterharzen. Durch Spritzgießen in die heiße Form wird die Härtungsreaktion derart beschleunigt, daß durch den Polymerisationsschrumpf Risse im Formteil entstehen, die zwar durch den angewendeten Druck nachgefüllt werden, aber die Formteile dennoch unbrauchbar machen.

Es ist daher als äußerst überraschend zu bezeichnen, daß lagerstabile, durch latente Katalysatoren voraktivierte Epoxid/Isocyanat-Harze (EPIC-Harze) zur Verarbeitung im Spritz-Gießprozeß ideal geeignet sind, da der Fachmann erwarten mußte, daß beim Spritzgießen in heiße Formen die Trimerisationsreaktion und die Oxazolidinonbildung so rasch ablaufen, daß auch bei Verwendung dieser Harze fehlerhafte Formteile resultieren. Dies ist aber überraschenderweise nicht der Fall.

Bei dem erfindungsgemäßen Verfahren mit den erfindungsgemäßen Gießharzen entstehen durch Härtung unter Druck und erhöhten Formtemperaturen >60 °C fehlerfreie Formteile.

Die Gießharzmassen besitzen den Vorteil einer niedrigen Viskosität und ermöglichen damit die Mitverwendung hoher Anteile an Gesteinsmehlen als Füllstoff. Weiter können die Gießharzmassen auch bei Raumtemperatur mit den Füllstoffen und gegebenenfalls sonstigen Zusatzstoffen vermischt werden. Vorteilhaft ist auch die lange Gebrauchsdauer, die unter Ausschluß von Feuchtigkeit mehrere Monate beträgt. Dadurch werden im Verlauf der Anwendung nur wenig Mischvorgänge erforderlich. Auf die Verwendung von Misch-dosiereinrichtungen mit Durchlaufmischern kann daher verzichtet werden.

Ein weiterer Vorteil des Verfahrens besteht darin, daß die Schwindungserscheinungen der Formteile äußerst gering sind und die Formstoffe die typischen Eigenschaften der EPIC-Kunststoffe aufweisen, nämlich inhärenten Flammschutz (ohne Halogen) und eine hohe Dauertemperaturbeständigkeit.

Gegenstand der vorliegenden Erfindung ist ein Verfahren zur Herstellung von Kunststoff-Formteilen

durch Härtung von reaktionsfähigen, flüssigen Gießharzmassen bei erhöhten Temperaturen,
dadurch gekennzeichnet, daß die gegebenenfalls Füllstoffe und/oder Verstärkungsmaterialien enthaltende Gießharzmasse Reaktionsharz auf der Basis von

a) mindestens einem organischen Polyisocyanat und

b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2:1 bis 500:1 entspricht,

das Reaktionsharz mit mindestens

d) einem alkylierend wirkenden Sulfonsäurealkylester von Methyliodid oder von Dimethylsulfat stabilisiert ist und mit

e) mindestens einem latenten, durch Wärme aktivierbaren Katalysator, vorzugsweise mit tertiären oder quartären Ammoniumsalzen von alkylierend wirkenden oder sauren Estern von organischen Phosphonsäuren oder der Phosphorsäure und/oder Additionskomplex von Bortrihalogeniden mit tertiären Aminen, versetzt ist, sowie

f) gegebenenfalls übliche Hilfs- und/oder Zusatzmittel

enthält,
und wobei die flüssige Gießharzmasse, vorzugsweise bei Raumtemperatur, mittels Druck (durch eine Rohrleitung) in eine heiße Form überführt wird, die eine Temperatur, vorzugsweise über 70 °C aufweist, und in der gegebenenfalls Verstärkungsmaterialien enthaltenden Form unter dem durch die flüssige Gießharzmasse übertragenen Druck oder durch Anwendung eines Preßdrucks von außen bis zur Verfestigung verbleibt.

In einer bevorzugten Ausführungsform ist das die Komponenten a) und b) enthaltende Reaktionsharz

c) in Gegenwart eines tertiären Amins als Katalysator zu einem Oxazolidinon- und Isocyanuratgruppen aufweisenden, höherviskosen Zwischenprodukt umgesetzt und die Reaktion bei einer Umsetzung von maximal 65 % der im Ausgangsgemisch vorliegenden Isocyanatgruppen

d) durch Zugabe einer der Aminmenge mindestens äquivalenten Menge des alkylierend wirkenden Sulfonsäurealkylesters von Methyliodid oder von Dimethylsulfat abgebrochen, und das so erhaltene, noch flüssige oder schmelzbare Zwischenprodukt in flüssiger Form

e) mit mindestens einen latenten, durch Wärme aktivierbaren Katalysator, vorzugsweise tertiären oder quartären Ammoniumsalzen von alkylierend wirkenden oder sauren Estern von organischen Phosphonsäuren oder der Phosphorsäure und/oder einem Additionskomplex von Bortrihalogeniden mit tertiären Aminen, und gegebenenfalls

f) Hilfs- und/oder Zusatzmitteln,

versetzt.

Gegenstand der vorliegenden Erfindung ist auch ein Verfahren, dadurch gekennzeichnet, daß die Gießharzmasse neben ihrer organischen Phase anorganische Füllstoffe oder Verstärkungsmaterialien anorganischer, organischer oder metallischer Art, vorzugsweise aus Gesteinsmehl, wie z.B. Quarzmehl, und weitere an sich bekannten Hilfs- und Zusatzmittel enthält.

Gegenstand der vorliegenden Erfindung ist auch ein Verfahren, dadurch gekennzeichnet, daß die Gießharzmasse unter Druck in eine geheizte Form eindosiert wird, die als Verstärkungsmaterialien Glaswolle, Glasgewebe, Glasgewirke oder Glasvlies enthält und mit einem Preßdruck von 1 bis 500 t geschlossen wird.

Gegenstand der vorliegenden Erfindung ist auch ein Verfahren, dadurch gekennzeichnet, daß die Gießharzmasse unter Druck in eine geheizte Form eindosiert wird, die Gewebe, Gewirke oder Vlies aus C-Fasern, Aramidfasern, Polyamid und/oder Metalldraht enthält und mit einem Preßdruck von 1 bis 500 t geschlossen wird.

Gegenstand der vorliegenden Erfindung ist schließlich ein Verfahren, dadurch gekennzeichnet, daß die Gießharzmasse weitere, auch bekannte Zusatzstoffe, z.B. Trennmittel, Weichmacher, Pigmente und/oder flammhemmende Zusätze enthält.

Die Gießharzmasse besteht zu 10 bis 100 %, vorzugsweise 10 bis 70 Gew.-% aus dem organischen Reaktionsharz.

Bei der Ausgangskomponente a) handelt es sich um beliebige organische Polyisocyanate der aus der Polyurethanchemie an sich bekannten Art. Geeignet sind beispielsweise aliphatische, cycloaliphatische,araliphatische, aromatische und hetrocyclische Polyisocyanate, wie sie z.B. von W. Siefken in Justus Liebigs Annalen der Chemie, 562, Seiten 75 bis 136, beschrieben werden, beispielsweise solche der Formel

$Q\ (NCO)_n$,

in der
n = 2-4, vorzugsweise 2,
und
Q einen aliphatischen Kohlenwasserstoffrest mit 2-18,
vorzugsweise 6-10 C-Atomen,
einen cycloaliphatischen Kohlenwasserstoffrest mit 4-15,
vorzugsweise 5-10 C-Atomen,
einen aromatischen Kohlenwasserstoffrest mit 6-15,
vorzugsweise 6-13 C-Atomen,
oder einen araliphatischen Kohlenwasserstoffrest mit 8-15,vorzugsweise 8-13 C-Atomen,
bedeuten, z.B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanato-methyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonylisocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE- PS 1 230 778), Biuretgruppenaufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen, Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihemit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DE-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4'-Diisocyanatodiphenylmethan oberhalb 20 Gew.-%, bezogen auf Gesamtgemisch.

Bei der Komponente b) handelt es sich um beliebige, mindestens zwei Epoxidgruppen, d.h. 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylmethan, von 4,4'-Dihydroxy-3,3'-dimethyldiphenylmethan, von 4,4'-Dihydroxydiphenylmethan, 4,4'-Dihydroxydiphenylcyclohean, von 4,4'-Dihydroxy-3,3'-dimethyldiphenylpropan, von 4,4'-Dihydroxydiphenyl, 4-Hydroxyphenyl-4-hydroxybenzoat, 1,1-Bis-(4-hydroxyphenyl)-3.3.5-trimethylcyclohexan aus 4,4'-Dihydroxydiphenylsulfon, von Tris-(4-hydroxyphenyl)-methan, den Chlorierungs-und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diaminodiphenylmethan, N-Diepoxypropyl-4-aminophenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N'-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome-oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexan-carboxylat.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2:1 bis 500:1, vorzugsweise 3:1 bis 65:1 und insbesondere 5:1 bis 30:1, entspricht.

Bei der Katalysatorkomponente c) handelt es sich um beliebige mono- oder polyfunktionelle organische Amine mit tertären Aminogruppen. Bevorzugte Amine der genannten Art weisen im allgemeinen ein Molekulargewicht von bis zu 353, insbesondere von 101 bis 185 auf. Bevorzugt sind solche tertiäre Amine, die bei der Reaktionstemperatur der ersten Reaktionsstufe flüssig sind. Typische Beispiele geeigneter bzw. bevorzugt geeigneter Amine sind Triethylamin, Tri-n-butylamin, N,N,N',N'-Tetramethyl-ethylendiamin, N,N-Dimethyl-benzylamin, Triethylendiamin oder Dimethyloctylamin, N-Methylmorpholin und Bis-(N,N-dimethylaminoethyl)-ether.

Die Katalysatoren c) werden in einer Menge von 0,01 bis 2, vorzugsweise 0,01 bis 0,1 Gew.-%, bezogen auf das Gesamtgewicht der Komponenten a) und b), eingesetzt.

Bei den Stoppern d) handelt es sich um Katalysatorengifte für die Katalysatoren c). Geeignet sind unter anderen beliebige, alkylierend wirkende Ester von organischen Sulfonsäuren. Vorzugsweise weisen diese Sulfonsäurealkylester ein Molekulargewicht von 110 bis 250 auf. Geeignet sind sowohl aliphatische Sulfonsäurealkylester wie n-Butansulfonsäuremethylester, n-Perfluorbutansulfonsäuremethylesteroder n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäuremethylester. Die genannten aromatischen Sulfonsäureester sind bevorzugt. Besonders bevorzugt wird p-Toluolsulfonsäuremethylester als Komponente d) verwendet. Ebenfalls geeignet jedoch weniger bevorzugt sind Methyljodid und Dimethylsulfat als Komponente d).

Die Komponente d) wird mindestens in einer solchen Menge verwendet, die den tert. Aminstickstoffatomen der Komponente c) äquivalent ist. Die Komponente d) wird sowohl als Stopper (bei Verwendung von c) als auch als Stabilisator (für die Mischung aus a) und b) wirksam.

Als latente Katalysatoren e) können beispielsweise e1) tertiäre oder quartäre Ammoniumsalze aus (i) organischen Aminen und (ii) alkylierend wirkenden oder sauren Estern von organischen Phosphonsäuren oder der Phosphorsäure oder e2) Additionskomplexe von Bortrihalogeniden mit tert. Aminen verwendet werden.

Bei dem Bestandteil (i) der latenten Katalysatoren e1) handelt es sich um beliebige mono- oder polyfunktionelle organische Amine mit sekundären und/oder tertiären Aminogruppen. Bei der Herstellung der Katalysatoren können sekundäre Aminogruppen durch Alkylierung in tert. Ammoniumgruppen, tert. Aminogruppen durch Neutralisation in tert. Ammoniumgruppen oder durch Quaternierung in quartäre Ammoniumgruppen überführt werden. Geeignete Amine der genannten Art weisen im allgemeinen ein Molekulargewicht von 45 bis 353, vorzugsweise von 45 bis 185 auf. Typische Beispiele geeigneter Amine sind Dimethylamin, Trimethylamin, Diethylamin, Triethylamin, Di-n-butylamin, Tri-n-butylamin, N,N'-Dimethylethylethylendiamin, N,N,N',N'-Tetramethyl-ethylendiamin, N,N-Dimethylbenzylamin, Triethylendiamin, Dimethyloctylamin, Diazabicyclooctan, Methyltrioctylamin, N-Methylmorpholin und Bis-(N,N-dimethyl-aminoethyl)-ether.

Bei dem Bestandteil (ii) handelt es sich um alkylierend wirkende oder saure Ester von organischen Phosphonsäuren oder der Phosphorsäure. Vorzugsweise werden als Phosphonsäureester neutrale, alkylierend wirkende Ester von organischen Phosphonsäuren verwendet. Diese Verbindungen weisen im allgemeinen ein Molekulargewicht von 124 bis 214 auf. Gut geeignet sind beispielsweise Methanphosphonsäuredimethylester, Methanphosphonsäurediethylester, Benzolphosphonsäuredimethylester, Benzolphosphonsäurediethylester oder Ethanphosphonsäurediethylester. Als Ester der Phosphorsäure können sowohl einbasische saure Ester als auch neutrale Ester verwendet werden. Diese Verbindungen weisen im allgemeinen ein Molekulargewicht von 126 bis 266 auf. Geeignet sind beispielsweise Dimethylphosphat, Diethylphosphat, Di-n-butylphosphat, Triethylphosphat oder Tri-n-butylphosphat.Bevorzugte Bestandteile (ii) der erfindungswesentlichen Katalysatoren c) sind Methanphosphonsäuredimethylester und Di-n-butylphosphat.

Die Herstellung der Katalysatoren e1) erfolgt nach bekannten Verfahren (z.B. Houben-Weyl, Bd. XII/2, S. 262 ff) durch Umsetzung der beispielhaft genannten Komponenten (i) und (ii) in vorzugsweise äquivalenten Mengen mit oder ohne Lösungsmittel bei Temperaturen von 20 bis 200 °C. Dabei kann vorteilhaft sein, unter Inertgas und/oder Druck zu arbeiten. Es ist auch möglich, beispielsweise einen Überschuß der Komponenten (i) oder (ii) einzusetzen, und anschließend gegebenenfalls den nicht umgesetzten Überschuß beispielsweise destillativ zu entfernern.

Besonders bevorzugte Beispiele erfindungsgemäß verwendbarer Katalysatoren e1) sind:

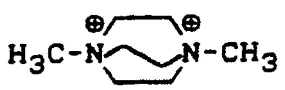 , 2 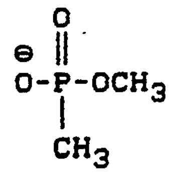

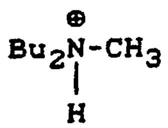 , 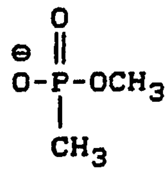

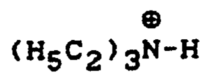 , 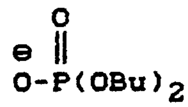

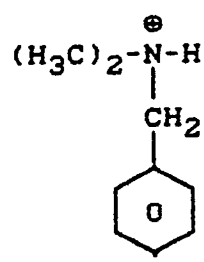 , 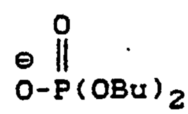

Geeignete latente Katalysatoren e2) sind beispielsweise die bekannten Additionskomplexe von Bortrihalogeniden, insbesondere Bortrichloriden oder Bortrifluoriden mit tert. Aminen, beispielsweise die in DE-PS 2 655 367 beschriebenen Additionskomplexe von Bortrichlorid und tert. Aminen der allgemeinen Formel

$BCl_3 \cdot NR_1R_2R_3$

in der $R_1$, $R_2$ und $R_3$ gleich oder verschiedene aliphatische, aromatische, heterocyclische oder arylaliphatische Regte sind, die paarweise auch Bestandteil von heterocyclischen Ringen sein können. Geeignet sind auch die analogen Komplexe des Bortrifluorids der Formel

$BF_3 \cdot NR_1R_2R_3$ ,

wobei $R_1$, $R_2$ und $R_3$ die vorstehend angegebene Bedeutung haben.

Gut geeignet sind beispielsweise die entsprechenden Bortrichlorid- bzw. Bortrifluorid-Komplexe von tert. Aminen der vorstehend bei der Beschreibung der Komponenten c) und e1) beispielhaft genannten Art oder auch von heterocyclischen tert. Aminen wie 1,2-Dimethylimidazol oder 1-Benzyl-2-phenylimidazol. Die Aminkomponente der Komplexe weist im allgemeinen ein Molekulargewicht innerhalb der oben in Zusammenhang mit der Komponente c) genannten Bereiche auf.

Die latenten Katalysatoren e) werden im allgemeinen in einer Menge 0,01 bis 20, vorzugsweise 0,1 bis 10 und besonders bevorzugt von 0,5 bis 2 Gew.-Teilen, bezogen auf 100 Gew.-Teile der im "B-Zustand" befindlichen Zwischenstufe, d.h. des nach Abstoppen des Katalysators c) vorliegenden Harzes, eingesetzt.

Ebenso wie im Falle der Katalysatoren c) können auch als Katalysatoren e) beliebige Gemische der beispielhaft genannten Verbindungen eingesetzt werden. Durch die Art und Konzentration der Katalysatoren c) und e) kann die Reaktionszeit und auch die Reaktionstemperatur sowohl bei der Herstellung der Zwischenstufe ("B-Zustand") als auch bei der Aushärtung des in der Zwischenstufe vorliegenden Harzes den jeweiligen Bedürfnissen angepaßt werden.

Bei den gegebenenfalls mitzuverwendenden Hilfs- und Zusatzmitteln f) handelt es sich beispielsweise

f1) um polymerisierbare, olefinisch ungesättigte Monomere, die in Mengen von bis zu 100 Gew.-%, vorzugsweise bis zu 50 Gew.-%, bezogen auf das Gesamtgewicht der Komponenten a) und b) zum Einsatz gelangen können.

Typische Beispiele von Zusatzmitteln f1) sind olefinisch ungesättigte Monomere, die keine gegenüber NCO-Gruppen reaktive Wasserstoffatome aufweisen, wie z.B. Diisobutylen, Styrol, $C_1$-$C_4$-Alkylstyrole, wie α-Methylstyrol, α-Butylstyrol, Vinylchlorid, Vinylacetat, Maleinimidderivate wie z.B. Bis-(4-maleinimido-phenyl)-methan, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet, vorausgesetzt, die Zusatzmittel f1) werden überhaupt eingesetzt.

Bei Mitverwendung von Zusatzmitteln f1) ist die Mitverwendung von klassischen Polymerisationsinitiatoren wie z.B. Benzoylperoxid möglich, im allgemeinen jedoch nicht erforderlich.

Weitere, gegebenenfalls mitzuverwendende Hilfs- und Zusatzmittel f) sind

f2) mindestens 2, insbesondere 2 bis 8 und vorzugsweise 2 bis 3 alkoholische Hydroxylgruppen aufweisende organische Verbindungen des Molekulargewichtsbereichs 62 bis 2000, wie sie als Aufbaukomponente für Polyurethane an sich bekannt sind. Beispiele sind einfache mehrwertige Alkohole wie Ethylenglykol, Hexandiol-1,6, Glycerin oder Trimethylolpropan, Dimethylsiloxan-Einheiten aufweisende Polyole, z.B. Bis-(dimethyl-hydroxymethyl-silyl)-ether; Estergruppen aufweisendde Polyhydroxylverbindungen wie z.B. Ricinusöl oder Polyhydroxypolyester wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxypolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind.

Die Zusatzmittel f2) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen der Komponente f2), von mindestens 2:1, vorzugsweise mindestens 2,5:1, entspricht. In jedem Fall muß die Menge der Komponente a) so bemessen sein, daß das Äquivalentverhältnis von Isocyanatgruppen der Komponente a) zur Summe der Epoxidgruppen der Komponente b), Hydroxylgruppen der Komponente f2) und den gegebenenfalls in der Komponente b) vorliegenden Hydroxylgruppen mindestens bei 1,2:1, besonders bevorzugt bei 4:1 bis 30:1 liegt.

Die Mitverwendung von Hilfs- und Zusatzmitteln f1) bzw. f2) ist im allgemeinen nicht erforderlich. Die unter f1) beispielhaft genannten Zusatzmittel sind im übrigen gegenüber den unter f2) beispielhaft genannten Verbindungen bevorzugt. Grundsätzlich ist es auch möglich, gleichzeitig beide Arten von Hilfs- und Zusatzmitteln mitzuverwenden.

Weitere, gegebenenfalls mitzuverwendende Hilfs- und Zusatzmittel f) sind beispielsweise Füllstoffe wie z.B. Gesteinsmehl wie Quarzmehl, Kreide oder Aluminiumoxid; Pigmente, z.B. anorganische Pigmente wie Titandioxid, Eisenoxid oder organische Pigmente wie Phthalocyanin-Pigmente; Weichmacher wie z.B. Dioctylphthalat, Tributyl-oder Triphenylphosphat; (lösliche) Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "liquid cristal"). Weiterhin sind geeignet Gewebe oder Gewirke aus Polyamid und oder Metalldraht.

Die Hilfs- und Zusatzmittel können sowohl den Ausgangsmaterialien a) und b) vor der Durchführung des erfindungsgemäßen Verfahrens einverleibt oder auch erst später dem in der Zwischenstufe vorliegenden Harz, gegebenenfalls nach Aufschmelzen, zugemischt werden.

In einer bevorzugten Ausführungsform werden zur Durchführung des erfindungsgemäßen Verfahrens werden die Ausgangsmaterialien a) bis c) und gegebenenfalls die Hilfs- und Zusatzmittel f) bzw. ein Teil hiervon miteinander vermischt und innerhalb des Temperaturbereichs von 20 bis 150°C, vorzugsweise 60 bis 130°C, zur Reaktion gebracht. Nach einem Umsatz von maximal 65 %, vorzugsweise von 30 bis 60 % der in das Ausgangsgemisch über die Komponente a) eingebrachten Isocyanatgruppen wird die Reaktion durch Zugabe des Stoppers d) abgebrochen.

Das hierbei anfallende, im "B-Zustand" vorliegende, höherviskose Zwischenprodukt stellt im allgemeinen bei Raumtemperatur eine Flüssigkeit oder einen bei Temperaturen von maximal 120°C schmelzbaren Feststoff dar und kann, gegebenenfalls nach beliebig langer Zwischenlagerung, der zweiten Stufe des erfindungsgemäßen Verfahrens zugeführt werden.

Hierzu werden dem Zwischenprodukt, gegebenenfalls nach Aufschmelzen, der latente Katalysator e) und gegebenenfalls (weitere) Hilfs- und Zusatzmittel zugesetzt. Werden besonders dünnviskose Gemische bevorzugt, so werden die Ausgangskomponenten a) und b) gemischt mit Stoppern d) versehen und kurzzeitig (0,5 bis 1 h) auf 120 °C unter Stickstoff erhitzt. Man erhält dann lagerstabile, sehr dünnflüssige EPIC-Harze mit Viskositäten (100 mPa.s (25 °C), denen nach Abkühlen der latente Katalysator e) und gegebenenfalls weitere Hilfs- und Zusatzmittel zugesetzt werden.

Als Hilfs- und Zusatzmittel kommen auch "reaktive Verdünner" in Betracht, wobei als "reaktive Verdünner" bei Raumtemperatur flüssige Polyisocyanate der unter a) beispielhaft genannten Art bzw. bei Raumtemperatur flüssige Polyepoxide der unter b) beispielhaft genannten denkbar sind, wobei jedoch stets auf einen in derartigen Gemischen vorliegenden NCO-Überschuß gegenüber Epoxid- und Hydroxylgruppen entsprechend einem Äquivalentverhältnis von mindestens 1,2:1, vorzugsweise von mindestens 3:1 geachtet werden muß.

Die Aushärtung erfolgt unter Druck in Formen mit Temperaturen von mindestens 70 °C, vorzugsweise 70 bis 180 °C, wobei es zwecks Erreichens optimaler Eigenschaften oftmals angezeigt ist, die resultierenden Kunststoffe bei Temperaturen zwischen 150 und 250 °C, vorzugsweise zwischen 200 und 230 °C, nachzuhärten.

Im Falle der Verarbeitung der erfindungsgemäßen Harze in Kombination mit geeigneten Treibmitteln ist auch die Herstellung von Schaumstoffen möglich.

Nach dem erfindungsgemäßen Verfahren können weiterhin unter Verwendung von Glasgeweben, Glasmatten, Papier, Kunststoff-Folien, Furnierblättern, Keflar®-Geweben, C-Fasergeweben oder Gewirken, Glasvlies oder Steinwolle, Schichtpreßstoffe mit vorzüglichen Eigenschaften hergestellt werden.

Die herausragenden Eigenschaften sind der inhärente Flammschutz und die hohe Dauerwärmebeständigkeit der Formteile.

Beispiel 1

950 Gew.-Teile eines Gemischs aus 60 % 2,4'-Diisocyanatodiphenylmethan und 40 % 4,4'-Diisocyanatodiphenylmethan (NCO-Gehalt = 33,6 %) werden bei 50 °C mit 50 Gew.-Teilen des Diglycidylethers von Bisphenol A (Epoxidzahl = 0,585) und 0,5 ml (3,2 mmol) Dimethylbenzylamin gemischt und anschließend auf 120 °C aufgeheizt. Die leicht exotherme Reaktion zeigt den sofortigen Beginn der Isocyanurat-und Oxazolidinonbildung an. Nach 15 Min. Reaktionszeit ohne externe Heizung wird der Ansatz mit Eiswasser gekühlt. Dadurch stellt sich eine Innentemperatur von ca. 90 °C ein. Dem Ansatz wird eine Probe entnommen. Die Probe ist bei Raumtemperatur ein festes, klebriges Harz und besitzt einen NCO-Gehalt von 18,4 % NCO. Durch Zugabe von 6,5 ml Stopperlösung I (= 15,4 gew.-%ige Lösung von p-Toluolsulfonsäuremethylester in einem Gemisch aus 60 % 2,4'-Diisocyanatodiphenylmethan und 40 % 4,4'-Diisocyanatodiphenylmethan) wird die Reaktion abgebrochen. Anschließend setzt man dem Ansatz weitere 596 Gew.-Teile der obengenannten Diisocyanatkomponente und 31 Gew.-Teile des obengenannten Diglycidylethers zu und rührt das Ganze bei 120 °C bis eine klare homogene Lösung entstanden ist. Es entsteht ein bei Raumtemperatur flüssiges, klares, gelbes, lagerstabiles Harz mit einer Viskosität bei 25 °C von 9300 mPa.s und einem NCO-Gehalt von 23,6 %.

Beispiel 2

Zu 120 g des in Beispiel 1 beschriebenen Diglycidethers und 480 g des in Beispiel 1 beschriebenen Polyisocyanatgemisches werden bei 80 °C 0,3 ml Dimethylbenzylamin zugefügt. Durch die einsetzende exotherme Isocyanuratbildung erwärmt sich der Ansatz ohne weitere Wärmezufuhr innerhalb von 2 Stunden auf 120 °C. Zum Reaktionsgemisch werden dann 3,82 ml Stopperlösung I (siehe auch Beispiel 1) gegeben. Man rührt noch 30 min bei 120 °C nach. Das Harz besitzt einen NCO-Gehalt von 20,0 %. Durch Abmischen mit 327 g der obengenannten Diisocyanatkomponente und 81,8 g des obengenannten Diglycidethers und 30 min Nachrühren bei 120 °C erhält man ein bei Raumtemperatur flüssiges, klares, gelbes, lagerstabiles Harz mit einer Viskosität von 2016 mPa.s (25 °C) und einem NCO-Gehalt von 21,1 %.

Beispiel 3

120 Gew.-Teile eines Gemischs aus 60 % 2,4-Diisocyanatodiphenylmethan und 40 % 4,4'-Diisocyanatodiphenylmethan (NCO-Gehalt = 33,6 %) (MDI) werden mit 30 Gew.-Teilen des Diglycidethers von Bisphenol A (Epoxidzahl = 0,5) und 1,5 ml einer separat hergestellten 1 M Lösung von p-Toluolsulfonsäuremethylester in dem obengenannten Diisocyanatgemisch (MDI) gemischt und 30 min unter Stickstoff und

Rühren auf 120 °C erhitzt. Nach Abkühlen erhält man ein Reaktivharz (I) mit folgenden Kenndaten:

| | |
|---|---|
| % NCO | = 26,2 (bezogen auf Gesamtgemisch) |
| Viskosität 25 °C | = 55 mPa.s |

100 Gew.-Teile des Reaktivharzes (I) werden bei Raumtemperatur mit 1 Gew.-Teil des Komplexes aus $BCl_3$ Dimethylbenzylamin 10 Std. gerührt. Der Katalysator löst sich vollständig auf; die Viskosität des Reaktivharzes bleibt dabei unbeeinflußt. Man erhält auf diese Weise ein über einen Zeitraum von 6 Monaten NCO und viskositätsstabiles voraktiviertes, sehr dünnflüssiges Gießharz zum Einsatz in dem erfindungsgemäßen Verfahren.

Beispiel 4

100 Gew.-Teile des Reaktivharzes (I) aus Beispiel 3 werden bei Raumtemperatur mit 1 Gew.-Teil Dimethylbenzylammoniumdibutylphosphat gemischt. Die Mischung ist homogen; der flüssige Katalysator löst sich vollständig auf. Die Viskosität des Reaktivharzes bleibt dabei unbeeinflußt. Man erhält auf diese Weise ein über einen Zeitraum von mindestens 7 Tagen NCO- und viskositätsstabiles voraktiviertes, sehr dünnflüssiges Gießharz zum Einsatz in dem erfindungsgemäßen Verfahren.

Beispiel 5

100 Gew.-Teile des EPIC-Harzes aus Beispiel 2 werden mit 1 Gew.-Teil $BCl_3$-Dimethylbenzylamin Komplex bei Raumtemperatur 10 Stunden unter $N_2$ gerührt. Der Katalysator löst sich dabei vollständig auf. Anschließend werden dem Gemisch 150 Gew.-Teile Quarzmehl hinzugegeben. Nach 10 min langem Rühren unter Vakuum bei einem Druck von 12 Torr erhält man eine gebrauchsfähige Gießharzmasse.

Die so erhaltene Gießharzmasse wird in einen Druckkessel gegeben, der über eine Schlauchleitung mit einer mit Ventil versehenen Einspritzdüse verbunden ist. Der Druckkessel wird über ein im Deckel angebrachtes Ventil unter Preßluft von 4 atü gesetzt. Die Einspritzdüse wird gegen das im unteren Teil eines eigenbeheizten, hydraulisch zu öffnenden und zu schließenden Werkzeugs geführt, das eine Temperatur von 160 °C aufweist und dessen Hohlraum eine Platte mit den Abmessungen 200 x 200 x 4 mm darstellt. Nach Öffnen des Ventils an der Einspritzdüse tritt die in dem Druckkessel befindliche Gießharzmasse in das heiße Stahlwerkzeug ein, während die Luft durch die Trennfuge der Werkzeughälften entweicht. Nach 6 Minuten schließt zunächst das Ventil an der Einspritzdüse, danach öffnet die Hydraulik das Werkzeug, dem eine homogene, blasenfreie Kunststoffplatte entnommen wird, die frei von Einfallstellen ist. Die Platte wird 4 Stunden bei 160 °C, dann 4 Stunden bei 200 °C und 4 Stunden bei 250 °C nachgetempert. Danach weist sie folgende Eigenschaften auf:

| | Meßmethode: DIN |
|---|---|
| Zugfestigkeit 80 ($N/mm^2$) | 53 455 |
| Reißdehnung 1 (%) | 53 455 |
| E-Modul aus Zugversuch | |
| 10 000 ($N/mm^2$) | 53 457 |
| Biegefestigkeit 130 ($N/mm^2$) | 53 452 |
| Randfaserdehnung 1,5 (%) | 53 452 |
| Schlagzähigkeit 12 ($kJ/m^2$) | 53 453 |
| Martensgrad >250 (°C) | 53 458 |
| TG 300 (°C) | - |

Beispiel 6

100 Gew.-Teile des Reaktivharzes (I) aus Beispiel 3 werden mit 1 Gew.-Teil $BCl_3$ Dimethylbenzylamin-Komplex bei Raumtemperatur 8 Stunden unter $N_2$ gerührt. Der Katalysator löst sich dabei vollständig auf.

Das voraktivierte Harz ist in verschlossenen Gebinden mindestens 6 Monate bei Raumtemperatur lagerstabil.

In einer geöffneten Plattenform, die sich in einer hydraulischen heizbaren Presse befindet, wird so viel Glasvlies eingelegt, daß die Form mit 80 Gew.-% Glas gefüllt ist. Die Form wird mit der hydraulischen Presse und einem Druck von 30 t geschlossen. Nach dem Vorkomprimieren wird die Form wieder geöffnet mit 20 Gew.-% des voraktivierten EPIC-Harzes durchtränkt und nach Verschließen des Harzzulaufventils mit einem Druck von 30 t geschlossen. In der auf 160 °C heißen Form härtet das Gießharz innerhalb von 4 bis 10 min in einer homogenen Platte aus. Die Platte wird nach Öffnen der Form entnommen und 4 Stunden bei 160 °C anschließend 4 Stunden bei 200 °C und dann 4 Stunden bei 250 °C nachgetempert.

Die Platte ist danach geeignet zur Anwendung als Katalysatorabdeckplatte im Automobilbau oder zum Abdämmen von sehr heißen Teilen bzw, Räumen z.B. in Verbrennungsmotoren, Kurzfristiges Erhitzen auf 600 °C übersteht die erfindungsgemäße Platte ohne Verkohlen oder Dimensionsverlust.

## Ansprüche

1. Verfahren zur Herstellung von Kunststoff-Formteilen durch Härtung von reaktionsfähigen, flüssigen Gießharzmassen bei erhöhten Temperaturen, dadurch gekennzeichnet, daß die Gießharzmasse ein Reaktionsharz auf Basis von
   a) mindestens einem organischen Polyisocyanat und
   b) mindestens einer, mindestens zwei Epoxidgruppen aufweisenden organischen Verbindung in einer solchen Menge, die einem Äquivalentverhältnis von Isocyanatgruppen zu Epoxidgruppen von 1,2:1 bis 500:1 entspricht,
   das Reaktionsharz mit mindestens
   d) einem alkylierend wirkenden Sulfonsäurealkylester von Methyliodid oder von Dimethylsulfat stabilisiert ist und mit
   e) mindestens einem latenten, durch Wärme aktivierbaren Katalysator, versetzt ist, sowie
   f) gegebenenfalls übliche Hilfs- und/oder Zusatzmittel
   enthält,
   und wobei die Gießharzmasse mittels Druck in eine heiße Form überführt wird, die eine Temperatur über 70 °C aufweist, und in der gegebenenfalls Verstärkungsmaterialien enthaltenden Form unter dem durch die flüssige Gießharzmasse übertragenen Druck oder durch Anwendung eines Preßdrucks von außen bis zur Verfestigung verbleibt.

2. Verfahren nach Anspruch 1, dadurch gekennzeichnet, daß man das die Komponenten a) und b) enthaltende Reaktionsharz
   c) in Gegenwart eines tertiären Amins als Katalysator zu einem Oxazolidinon- und Isocyanuratgruppen aufweisenden, höherviskosen Zwischenprodukt umsetzt und die Reaktion bei einer Umsetzung von maximal 65 % der im Ausgangsgemisch vorliegenden Isocyanatgruppen
   d) durch Zugabe einer der Aminmenge mindestens äquivalenten Menge des alkylierend wirkenden Sulfonsäurealkylesters abbricht und das so erhaltene, noch flüssige oder schmelzbare Zwischenprodukt in flüssiger Form
   e) mit mindestens einen latenten, durch Wärme aktivierbaren Katalysator versetzt.

3. Verfahren nach wenigstens einem der vorhergehenden Ansprüche, dadurch gekennzeichnet, daß der latente Katalysator e) ein tertiäres oder quartäres Ammoniumsalz von alkylierend wirkenden oder sauren Estern von organischen Phosphonsäuren oder der Phosphorsäure und/oder ein Additionskomplex von Bortrihalogeniden mit tertiären Aminen ist.

4. Verfahren nach wenigstens einem der vorhergehenden Ansprüche, dadurch gekennzeichnet, daß die Gießharzmasse in ihrer organischen Phase aus 10 bis 70 Gew.-% des Reaktionsharzes besteht.

5. Verfahren nach wenigstens einem der vorhergehenden Ansprüche, dadurch gekennzeichnet, daß die Gießharzmasse neben ihrer organischen Phase eine anorganische, aus Gesteinsmehl, wie z.B. Quarzmehl und weitere an sich bekannte Hilfs- und Zusatzmittel f) enthält.

6. Verfahren nach wenigstens einem der vorhergehenden Ansprüche, dadurch gekennzeichnet, daß die flüssige Gießharzmasse unter Druck in eine geheizte Form eindosiert wird, die Glaswolle, Glasgewebe, Glasgewirke oder Glasvlies enthält und mit einem Preßdruck von 1 bis 500 t geschlossen wird.

7. Verfahren nach wenigstens einem der vorhergehenden Ansprüche, dadurch gekennzeiochnet, daß die flüssige Gießharzmasse unter Druck in eine geheizte Form eindosiert wird, die Gewebe oder Gewirke oder Vlies aus C-Fasern, Aramidfasern, Polyamid und/oder Metalldrahtenthält und mit einem Druck von 1 bis 500 t geschlossen wird.

8. Verfahren nach wenigstens einem der vorhergehenden Ansprüche, dadurch gekennzeichnet, daß die Gießharzmasse weitere Zusatzstoffe wie Trennmittel, Weichmacher, Pigmente und/oder und flammhemmende Zusätze enthält.

9. Verwendung der nach wenigstens einem der vorhergehenden Ansprüche erhältlichen Formteile als hochtemperaturbeständige Isoliermaterialien oder Konstruktionsmaterialien.